# EUROPEAN PATENT SPECIFICATION

(11) **EP 4 501 550 B1**
(45) Date of publication and mention of the grant of the patent: **04.11.2026**
(21) Application number: 24190614.8
(22) Date of filing: 24.07.2024
(51) Int. Cl.: B25J 9/06, B25J 9/10, F01D 21/00, G01N 21/84, F01D 5/00, F01D 25/28, G01N 21/954

(54) **RIGIDIZABLE INSERTION TOOL**
VERSTEIFBARES EINSETZWERKZEUG
OUTIL D'INSERTION RIGIDIFIABLE

(30) Priority: 04.08.2023 US 202318230558
(43) Date of publication of application: 05.02.2025
(73) Proprietor: General Electric Company, Cincinnati, Ohio 45215-6301 (US); Oliver Crispin Robotics Limited, Altrincham, Cheshire WA14 2DT (GB)
(72) Inventor: LIU, Chang, Niskayuna, 12309 (US); BENNETT, JR., Grover Andrew, Niskayuna, 12309 (US); TRIVEDI, Deepak, Niskayuna, 12309 (US); GRAHAM, Andrew Crispin, Altrincham, WA14 2DT (GB)
(74) Representative: Openshaw & Co.

(56) References cited:
- US-A- 5 807 241
- US-A1- 2023 194 234
- US-B2- 11 707 819

## Description

### FIELD

The present subject matter relates generally to a tool for inspecting an environment and/or performing maintenance operations on a component within the environment, such as within an annular space in a turbine engine.

### BACKGROUND

At least certain gas turbine engines include, in serial flow arrangement, a compressor section including a low-pressure compressor and a high-pressure compressor for compressing air flowing through the engine, a combustor for mixing fuel with the compressed air such that the mixture may be ignited, and a turbine section including a high-pressure turbine and a low-pressure turbine for providing power to the compressor section.

Within one or more of the sections, at least certain gas turbine engines define an annular opening. Certain of these annular openings may vary in size, such that a dedicated, specialized insertion tool must be utilized with each annular opening to extend around and through such annular opening. US5807241 discloses an insertion tool according to the preamble of independent claim 1.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1 is a cross-sectional schematic view of a high-bypass turbofan jet engine in accordance with some embodiments;
FIGS. 2 is a perspective view of an insertion tool in accordance with some embodiments;
FIG. 3A and FIG. 3B are perspective and bottom views of a male end of a joint in accordance with some embodiments;
FIG. 4A and FIG. 4B are perspective and bottom views of a female end of a joint in accordance with some embodiments;
FIG. 5A and FIG. 5B are bottom and top views of a rigidized joint in accordance with some embodiments.
FIG. 6A and FIG. 6B are side and bottom views of a non-rigidized joint in accordance with some embodiments;
FIG. 7A and FIG. 7B are side views of segments pitched at different angles in accordance with some embodiments;
FIG. 8A and FIG. 8B are top views of segments yawed at different angles in accordance with some embodiments; and
FIG. 9 is a flow diagram of a process for additively manufacturing a joint in accordance with some embodiments.
FIG. 10A is a bottom view of a female end of a joint in accordance with some embodiments; and
FIG. 10B is a perspective view of a male end of a joint in accordance with some embodiments.

Repeat use of reference characters in the present specification and drawings is intended to represent the same or analogous features or elements of the present disclosure.

### DETAILED DESCRIPTION

Reference now will be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Moreover, each example is provided by way of explanation of the invention, not limitation of the disclosure. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. Thus, it is intended that the present disclosure covers such modifications and variations as come within the scope of the appended claims.

As used herein, the terms "first," "second," "third," etc. may be used interchangeably to distinguish one component from another and are not intended to signify location or importance of the individual components. The singular forms "a,'' "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In general, an insertion tool in accordance with one or more embodiments described herein can be configured to permit an operator or robotic assembly to service (e.g., inspect and/or repair) a cavity, such as an internal volume of a gas turbine engine. The insertion tool can generally include a plurality of adjacent segments which are selectively rigidizable with respect to one another so as to permit a tip of the insertion tool access to a confined cavity of the equipment through a complex pathway. Adjacent segments can include elements that form a joint for connecting the segments. The joints can include features to enhance the operation of the insertion tool during use, such as when inserting the insertion tool into the internal volume of the gas turbine engine.

In some embodiments, a translational joint for an insertion tool is provided that allows for more than one pivot axis in the extended stage but retracts through a region of progressively restricted motion until it is rigid. In some embodiments, a tool with a translational joint described herein has a reduced likelihood of becoming stuck during operation. In some embodiments, a joint includes one or more protrusions (e.g., male crenelations) on one segment and one or more recesses (e.g., female crenelation) on the other segment. As used herein, protrusions, recesses, and crenelations may generally be referred to as features of the segment. In some embodiments, the protrusions and recesses are tapered to prevent relative twisting motions between the two segments when the two segments are pushed together. In some embodiments, one protrusion is longer than others and includes a pin extension (e.g., two extruded cylinders) at the end of the tapered shape and one recess has a pin slot formed by two openings on the walls of the recess for receiving the pin extension.

In some embodiments, a joint described herein can be pivoted about two or all three (x, y, z) axes. In some embodiments, a tool described herein has multiple segments connected via such joints. In some embodiments, the width of the pin extension on a protrusion is longer than the largest opening gap between the walls of the slot in the corresponding recess such that the pin extension does not dislocate (e.g., slip out of the slot) with movement. In some embodiments, the tapering of the protrusions and recesses aligns the segment when a rigidizing force is applied to prevent misalignment of the segments during operation. In some embodiments, the tapered shapes of the protrusions and the recesses prevent relative twisting motion between adjacent segments when the segments are pushed together.

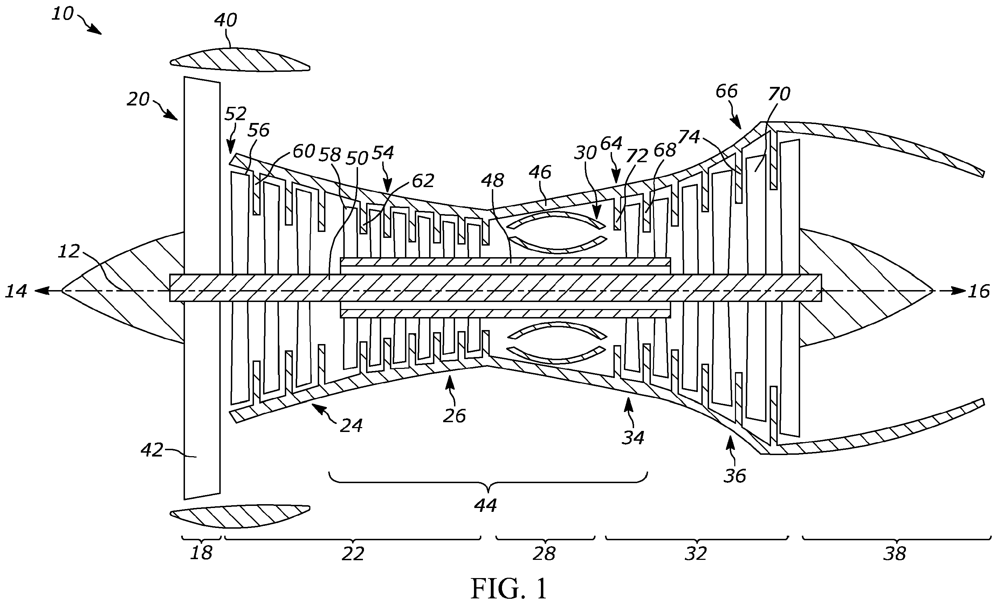

Referring now to the drawings, wherein identical numerals indicate the same elements throughout the figures. FIG. 1 is a schematic cross-sectional diagram of a conventional gas turbine engine 10 for an aircraft in which an imaging and inspection system described herein can operate. The gas turbine engine 10 as illustrated is a high-bypass turbofan get engine. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34 and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by core casing 46 which can be coupled with the fan casing 40.

An HP shaft or spool 48 disposed coaxially about the centerline 12 of the engine 10 drivingly connects the HP turbine 34 to the HP compressor 26. An LP shaft or spool 50, which is disposed coaxially about the centerline 12 of the engine 10 within the larger diameter annular HP spool 48, drivingly connects the LP turbine 36 to the LP compressor 24 and the fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

It will be appreciated that although not depicted in FIG. 1, the engine 10 may further define a plurality of openings allowing for inspection of various components within the turbine engine 10. For example, the engine 10 may define a plurality of insertion tool openings at various axial positions within the compressor section 22, the combustion section 28, and/or the turbine section 32. Additionally, as will be discussed below, the engine 10 may include one or more igniter ports within, e.g., the combustion section 28 of the engine 10, that may allow for inspection of the combustion section 28.

It should further be appreciated that the high bypass turbofan jet engine depicted in FIG. 1 is by way of example only, and that in other exemplary embodiments, the engine 10 may have any other suitable configuration, including, for example, any other suitable number of shafts or spools, turbines, compressors, etc. Additionally, or alternatively, in other exemplary embodiments, any other suitable turbine engine may be inspected with the tool described herein. For example, in other exemplary embodiments, the engine may not be a turbofan engine, and instead may be configured as a turboshaft engine, a turboprop engine, turbojet engine, etc., or may be an industrial gas turbine engine for electricity generation, fluid pumping etc.

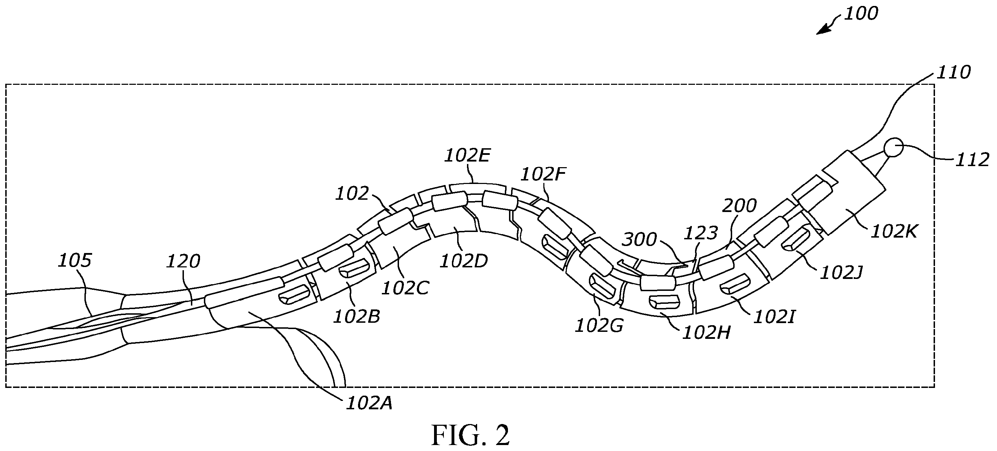

FIG. 2 illustrates a perspective view of a tool 100 as seen in accordance with an exemplary embodiment in a rigidized configuration. The tool 100 may generally be referred to as a rigidizable insertion tool that is configured to be operated in a rigidized state and a non-rigidized state. The tool 100 includes segments 102, such as segments 102A, 102B, 102C, 102D, 102E, 102F, 102G, 102H, 102I, 102J, and 102K. While the illustrated embodiment depicts the tool 100 as including eleven segments 102, the number of segments 102 may be varied. For instance, the tool 100 can include at least two segments, such as at least three segments, such as at least four segments, such as at least five segments, such as at least six segments, such as at least seven segments, such as at least eight segments, such as at least nine segments, such as at least ten segments, such as at least fifteen segments, such as at least twenty segments, such as at least thirty segments, such as at least forty segments, and so on. In an embodiment, at least two of the plurality of segments 102 can have the same, or similar, shapes as compared to one another. In a more particular embodiment, all of the plurality of segments 102 can share a common body shape or a particular aspect of body shape. For instance, all of the plurality of segments 102 can have the same sidewall lengths, as measured between opposing ends, all of the plurality of segments 102 can have the same general sidewall shape, or the like. In another embodiment, at least two of the plurality of segments 102 can have different shapes as compared to one another. For instance, at least two of the plurality of segments 102 can have different lengths as compared to one another, different circumferential dimensions as compared to one another, different curvature on the body, different ends, or the like. In some embodiments, the segments 102 can be formed as connected via the joints described herein using an additive manufacturing process, such as three-dimensional printing. In some embodiments, the segments 102 may have an effective outer diameter of 3-12mm, such as 6 mm outer diameter.

In one or more embodiments, one or more pairs of adjoining, i.e., neighboring, segments 102 may be attached together through a joint 123 described herein. For example, the ninth segment 102I has a male end 200 and the eighth segment 102H has a female end 300 that together form a joint 123. Each of the other pairs of adjoining segments 102 can be similarly attached via a joint. In some embodiments, the joints formed between at least two pairs of adjacent segments 102 can be different from one another. For example, the joint formed between the fourth and fifth segments 102D and 102E may be disposed in a first plane of rotation while the joint formed between the second and third segments 102B and 102C is disposed in a second plane of rotation different from the first plane. Accordingly, the angle of rotation of the joint formed between the third and fourth segments 102C and 102D can be different from the angle of rotation of the joint formed between the fourth and fifth segments 102D and 102E. In the non-rigidized configuration, such multi-planar interfacing may not materially affect the flaccid shape of the tool 100. However, when rigidized, the multi-planar interfacing can result in a tool 100 having a three-dimensional shape for accessing certain areas of the engine 10 or similar structure being serviced (inspected and/or operated upon).

A tip segment of the tool 100, such as segment 102K in the depicted embodiment, can have a dissimilar shape as compared to the other segments 102 for the purpose of permitting servicing operations. In the illustrated embodiment, segment 102K is depicted as having a grinding bur 112. In some embodiments, other tools such as a camera, a manipulator, etc., may be coupled to or extend from the tip segment of the tool 100. Generally, the tip segment of the tool 100 may have a tapered profile with a minimum width disposed at or adjacent to a tip 110 of the tool 100. In such a manner, the tool 100 may be more readily fed into the equipment being serviced, e.g., the aircraft engine. In some embodiments, the first segment 102A at the base of the tool 100 may be configured for coupling to a handle or actuator to be operated by a human operator or a robotic actuator.

In some embodiments, a line assembly 120 is inserted through one or more segments 102 of the tool. The line assembly 120 may operate to selectively rigidize the tool 100 and/or help support the tool 100 in the non-rigidized, i.e., flaccid, configuration. During tensioning of the tool 100, adjacent segments of the tool 100 may move until the line assembly 120 reaches a critical tension whereby the tool 100 is rigidized. In some embodiments, the line assembly 120 may include one or more lines that loop around the tip of the tool 100 and are connected to a handle 105 at two ends. In some embodiments, the line assembly 120 may include a single rope terminated at the tip 110. In some embodiments, the line assembly 120 may include one or more lines that are connected to only a subset of segments to selectively rigidize only a portion of the tool 100. For example, a line of line assembly 120 may terminate at segment 102D. Pulling the line would apply tension to lines 102A-D but leaves segments 102E-102K non-rigidized.

As seen in FIG. 2, according to some embodiments of the present disclosure, the tool 100 can define a complex geometry extending through a three-dimensional cartesian coordinate system. That is, the tool 100 may simultaneously extend in the X-, Y-, and Z-axis. The particular shape of the tool 100 can be viewed in response to the shape of the environment in which the tool is to be used within. In some embodiments, in the non-rigidized state, the tool 100 may be inserted through complex passageways such as ports and cavities of a jet engine. Once the tool 100 is inserted into position, the tool 100 may be rigidized to position the tip of the tool at the desired location and orientation to allow for inspection, servicing and/or repair of a part such as an engine component.

The handle 105 may be coupled to the tool 100 to permit an operator to hold the tool 100 at a desired location. The handle 105 may include one or more elements configured to permit selective rigidization of the tool 100. For example, the handle 105 can include a trigger configured to cause the tensioning of the line assembly 120 to pull the segments 102 toward the handle 105 to selectively rigidize the tool 100. The trigger can be rotatable, pivotal, translatable, or the like between a disengaged configuration in which the tool 100 is flaccid, i.e., non-rigidized, and an engaged configuration in which the tool is rigid. Accordingly, the operator can rigidize the tool 100 and release the trigger during servicing operations. In yet a further embodiment, the trigger can be operated by a motor or other power device such that rigidization of the tool 100 does not require the generation of manual pressure. The handle 105 may remain exposed from the engine while the tool 100 is inserted in the engine. In such a manner, the operator can maintain control of the tool 100 without direct access thereto.

The handle 105 can include an orifice configured to receive an implement for insertion into the engine. The orifice can include, for example, an opening into which the operator can insert the implement, e.g., a camera on a cable, into the engine. In certain embodiments, the orifice may be selectively sealable or closable to prevent ingress of dust and other contaminants from entering the tool 100. Once opened, the operator can feed and/or move the implement into or relative to the orifice so as to allow for the servicing operation to be performed as required.

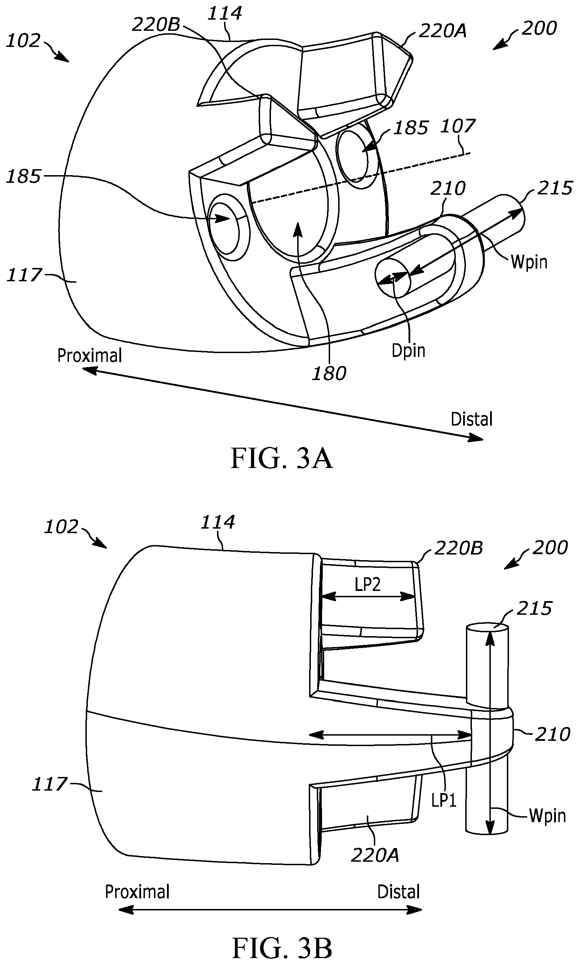

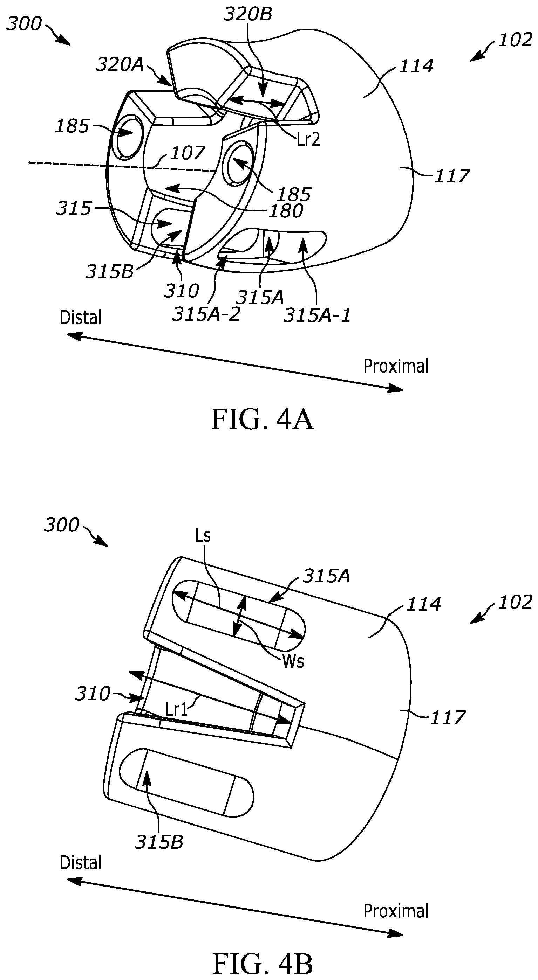

FIGS. 3A and 3B illustrate a perspective view and a bottom view, respectively, of a male end 200 of a segment 102 according to some embodiments. The segment 102 may be any segment of an insertion tool 100. FIGS. 3A and 3B illustrate only one end of a segment 102. In some embodiments, the other end of the segment 102 may include another male end 200, a female end 300 (FIGS. 4A and 4B), a tool tip 110 (FIG. 2), or a coupler for the handle 105. The segment 102 shown in FIGS. 3A and 3B has a body 114. The male end 200 is formed integrally with the body 114 of a segment 102. For example, the male end 200 may be formed as part of, and of the same material(s) as, the body 114 of a segment 102 during an additive manufacturing process. The body 114 has a length extending from the male end 200 to an opposite end (not shown). The body 114 further has a center line 107 extending along the center of the length of the body 114. As used herein, when describing elements and features of the male end 200 and the female end 300, distal and proximal are with reference to the body 114 of the segment. For example, in FIGS. 3A and 3B, distal is to the right of the page, away from the body 114 and proximal is to the left of the page, towards the body 114.

The male end 200 includes a first protrusion 210 with a pin extension 215. The first protrusion 210 may be referred to as a pinned protrusion and generally as a feature of a segment. The first protrusion 210 may be laterally offset from a center line 107 of the body 114 in a radial direction. In some embodiments, the first protrusion 210 includes a side that is aligned (e.g., forms a continuous surface) with the outer wall 117 of the segment 102. In some embodiments, the first protrusion 210 includes a side that is parallel to a wall of a central channel 180 of the segment. The first protrusion 210 extends away from the body 114 of the segment 102 along the length of the segment 102. In some embodiments, the first protrusion 210 may be tapered axially, being wider at the base proximal to the body 114 of the segment 102 and narrower (e.g., by at least 5%, 10%, 20%, 30%) towards a tip distal from the body 114. In some embodiments, the first protrusion 210 may be tapered radially, with the side facing the center line 107 of the segment 102 being narrower (e.g., by at least 5%, 10%, 20%, 30%) than the side facing away from the center of the segment102. In some embodiments, the first protrusion 210 has a trapezoidal cross-section profile at the proximal and/or distal end.

The pin extension 215 is attached to the distal end of the first protrusion 210 and extends outwardly substantially perpendicular to the first protrusion 210 and/or the center line 107. The pin extension 215 has a width Wpin and a diameter Dpin. The width Wpin is generally defined as the straight-line distance between the two ends on the pin extension 215 furthest from the first protrusion 210. In some embodiments, Wpin is greater than the distance between the widest gap of a corresponding pin slot 315 such as the distance between the distal end of the first opening 315A and the proximal end of the second opening 315B on the inner walls of the first recess 310 as shown in FIGS. 4A and 4B.

The diameter Dpin may be the effective diameter of the cross-section of the pin extension 215 in a plane perpendicular to the width Wpin. In some embodiments, the pin extension 215 may be cylindrical, having a circular, elliptical, or oval cross-section. The Dpin may be the diameter of the circular cross-section or the largest diameter of an elliptical or oval cross-section. In some embodiments, the pin extension 215 may be tapered toward the two ends such that the diameter Wpin of the pin extension 215 is greater near the first protrusion 210 and smaller near the two ends. In some embodiments, the two ends of the pin extension 215 may be angled relative to each other. For example, the two ends of the pin extension 215 may form a V shape with ends pointed towards or away from the body 114 of the segment 102. In another example, the two ends of the pin extension may angle up towards or down away from the center line 107 of the body 114.

In some embodiments, the male end 200 may include one or more additional features such as male protrusions without a pin extension, referred to as crenelation protrusions, such as a second protrusion 220A and a third protrusion 220B shown in FIGS. 3A and 3B. Generally, a crenelation protrusion may engage or disengage from recesses on a female end 300 based on the relative movements of two adjacent segments, while pinned protrusion, such as the first protrusion 210 remains connected to a female end 300 through the pin extension 215. In some embodiments, a male end 200 may include any number of crenelation protrusions such as one, two, three, four, or more. In some embodiments, the positioning of the crenelation protrusions may vary. For example, when only one crenelation protrusion is present, the sole crenelation protrusion may be positioned opposite (e.g., 180 degrees) from the first protrusion 210. When there are two crenelation protrusions as shown in FIG. 3A and 3B, the crenelation protrusions may be positioned at proximally 120 degrees radially from the pinned protrusion.

Generally, crenelation protrusions, such as the second and third protrusions 220A and 220B, extend away from the body 114 of the segment 102 along the length of the segment 102. The second and third protrusions 220A and 220B may be laterally offset from a center line 107 of the body 114 in a radial direction. In some embodiments, the second protrusion 220A and/or the third protrusion 220B include a side that is aligned (e.g., forms a continuous surface) with the outer wall 117 of the segment 102. In some embodiments, the second protrusion 220A and/or the third protrusion 220B include a side that is generally parallel with a wall of the central channel 180 of the segment. In some embodiments, the second protrusion 220A and/or the third protrusion 220B may be tapered axially, being wider at the base proximal to the body 114 and narrower (e.g., by at least 5%, 10%, 20%, 30%) at a tip distal from the body 114. In some embodiments, the second protrusion 220A and/or the third protrusion 220B may be tapered radially, with the side facing the center line 107 of the segment 102 being narrower (e.g., by at least 5%, 10%, 20%, 30%) than the side facing outward from the center of the segment 102. In some embodiments, the second protrusion 220A and/or the third protrusion 220B have a trapezoidal cross-section profile at the proximal and/or distal end. In some embodiments, the male end 200 may alternatively or additionally include recesses such as the second recess 320A and the third recess 320B shown in FIGS. 4A and 4B.

In some embodiments, the length Lp1 of a pinned protrusion such as the first protrusion 210 is greater than the length Lp2 of a crenelation protrusion, such as the second protrusion 220A and the third protrusion 220B. In some embodiments, Lp1 is at least 10%, 20%, 30% or 40% greater than Lp2.

FIGS. 4A and 4B illustrate a perspective view and a bottom view, respectively, of a female end 300 of a segment 102 according to some embodiments. FIGS. 4A and 4B illustrate only one end of a segment 102. In some embodiments, the other end of the segment 102 may include a male end 200, another female end 300, a tool tip 110, or a coupler for the handle 105. As disclosed above, the segment 102 has the body 114. The female end 300 is formed integrally with the body 114 of a segment 102. For example, the female end 300 may be formed as part of, and of same the material(s) as, the body 114 of a segment 102 during an additive manufacturing process. The body 114 has a length extending from the female end 300 to an opposite end (not shown). As used herein, when describing elements and features of the female end 300, distal and proximal are with reference to the body 114 of the segment 102. For Example, in FIG. 4A and 4B, distal is to the left of the page, away from the body 114 and proximal is to the right of the page, towards the body 114.

The female end 300 includes a first recess 310 with a pin slot 315. The first recess 310 may be referred to as a slotted recess and generally as a feature of a segment. The first recess 310 may be laterally offset from the center line 107 of the body 114 in a radial direction. In some embodiments, the first recess 310 includes a cutout that extends radially from the inner wall of the central channel 180 to the outer wall 117 of the segment 102. The first recess 310 extends in the direction of the center line 107 of the segment 102 and has a length Lr1. In some embodiments, the first recess 310 may be tapered axially, being narrower at the base proximal of the body 114 and wider (e.g., by at least 5%, 10%, 20%, 30%) at the end distal from the body 114. In some embodiments, the first protrusion 210 may be tapered radially, with the side facing the center line 107 of the segment 102 being narrower (e.g., by at least 5%, 10%, 20%, 30%) than the side facing away from the center line 107 of the segment102. In some embodiments, the first recess 310 has a trapezoidal cross-section profile at the proximal and/or distal end. Generally, the first recess 310 is configured to receive the first protrusion 210 of the male end 200 and may have a negative space with similar dimensions.

The pin slot 315 is formed in the first recess 310. The pin slot 315 may be elongated and extends along the length of the first protrusion 210 and the length of the segment 102. The pin slot 315 includes two openings 315A and 315B on the side walls of the first recess 310. In some embodiments, the openings 315A and 315B perforate the side walls of the first recess 310 through to the outer wall 117 of the segment 102. In some embodiments, the opening 315A and/or the opening 315B may include indentations on side walls of the recess 310 that do not extend to the exterior wall of the segment 102. The pin slot 315 has a distal end 315A-1 and a proximal end 315A-2. The length Ls of the pin slot 315 may be measured from the proximal end 315A-1 and the distal end 315A-2 and the width Ws of the pin slot 315 may be measured in the circumferential direction, perpendicular to Ls. The pin extension 215 (FIGS. 3A and 3B) is movable between the proximal end 315A-2 and the distal end 315A-1 of the pin slot with forward and backward movement of one segment relative to another segment. In some embodiments, Ls is at least five times greater than the effective diameter of Dpin. In some embodiments, for at least 70% of the width of the pin slot 315, Ws is at least 0.3mm greater than Dpin. In some embodiments, for at least 70% of the width of the pin slot 315, Ws is between .02mm to .5mm greater than Dpin. In some embodiments, for a joint 123 formed with powder-based additive manufacturing, Ws may be at least two times greater than the particle size of the powder material (e.g., 10 microns, 20 microns, 50 microns, etc.).

In some embodiments, the pin slot 315 may be rounded on the distal end 315A-1 and/or the proximal end 315A-2. In some embodiments, the middle portion of the pin slot 315 may vary in width. For example, the pin slot 315 may gradually taper from a wider distal end 315A-1 towards a narrower proximal end 315A-2 such that the motion of the pin extension 215 within the pin slot 315 is more restricted near the proximal end 315A-2.

In some embodiments, the female end 300 may include one or more additional features such as recesses without a pin slot, referred to as crenelation recesses, such as a second recess 320A and a third recess 320B. Generally, a crenelation recess may engage or disengage with a corresponding crenelation protrusion on a male end 200 based on the relative movements of two adjacent segments, while a slotted recess, such as the first recess 310, remains connected to a male end 200 through a pin extension 215 disposed within the pin slot 315. In some embodiments, a female end 300 may include any number of crenelation recesses such as one, two, three, four, or more. In some embodiments, the positioning of the crenelation recesses may vary. For example, when only one crenelation recess is present, the sole crenelation recess may be positioned opposite (e.g., 180 degrees) from the first protrusion 210. When there are two crenelation recesses as shown in FIG. 4A and 4B, the crenelation protrusions may be positioned at approximately120 degrees radially from the pinned protrusion.

Generally, crenelation recesses, such as the second recess 320A and the third recess 320B extend into the body 114 of the segment 102 along the length of the segment 102. The second recess 320A and the third recess 320B may be laterally offset from the center line 107 of the body 114 in a radial direction. In some embodiments, the second recess 320A and/or the third recess 320B extends from the wall of the central channel 180 through the exterior wall of the segment 102. In some embodiments, the second recess 320A and/or the third recess 320B may be tapered axially, being narrower at the proximal end and wider (e.g., by at least 5%, 10%, 20%, 30%) at the distal end. In some embodiments, the second recess 320A and/or the third recess 320B may be tapered radially, with the side facing the central channel 180 being narrower (e.g., by at least 5%, 10%, 20%, 30%) than the side facing outward. In some embodiments, the second recess 320A and/or the third recess 320B have a trapezoidal cross-section profile at the proximal and/or distal end. In some embodiments, the female end 300 may alternatively or additionally include protrusions such as the second protrusion 220A and the third protrusion 220B shown in FIGS. 3A and 3B. In some embodiments, the female ends 300 or male ends 200 of segments may include any combination of protrusions and recesses, generally referred to as features, that are configured to engage with features of another segment to restrict movement when a force pushes the segments together.

In some embodiments, the length Lr1 of a slotted recess such as the first recess 310 is greater than the length Lr2 of a crenelation recess, such as the second recess 320A and the third recess 320B. In some embodiments, Lr1 is at least 10%, 20%, 30%, or 40% greater than Lr2.

In some embodiments, as shown in FIGS. 3A, 3B, 4A, and 4B, a central channel 180 can be disposed within the body 114 of at least one of the segments 102, such as all of the segments 102, for routing an implement, such a camera, for performing an operation at the desired location. In some embodiments, the central channel 180 can be centrally, or generally centrally, located relative to the center line 107 of the body 114. In certain instances, the central channel 180 can be configured to receive an implement, such as a cable connected to a tool, e.g., camera. While a central channel 180 with a circular cross-section is shown, the central channel 180 can have a cross-section of any shape. In some embodiments, a counterforce element, such as a spring, may be disposed within the central channel 180 or another channel of the body between adjacent segments. The counterforce element may be positioned to assert a counterforce for pushing the pin extension away from the proximal end of the pin slot in the absence of a tensioning force, such as tension applied by a line assembly 120.

In some embodiments, as shown in FIGS. 3A and 4A, the body 114 further includes one or more auxiliary channels forming a line guide 185. A body 114 may include any number of channels serving as the line guide 185, such as one, two, three, four, or five. In some embodiments, the line guide 185 may be configured to receive one or more tensioning members such the line assembly 120 shown in FIG. 1. In some embodiments, the body 114 may include a single line guide 185 and the line assembly 120 of the tool includes a single rope that terminates at the tip segment of the tool.

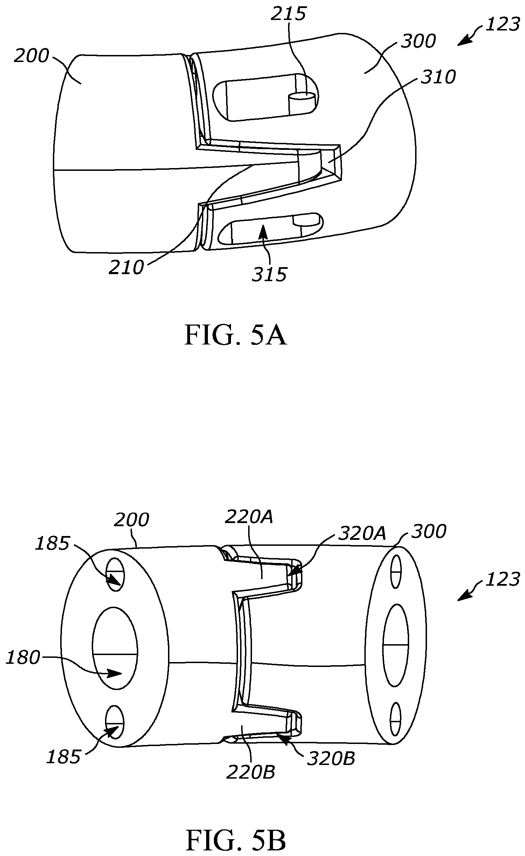

FIGS. 5A and 5B illustrate top and bottom views of a joint 123 of a tool 100 (FIG. 2) in a rigidized state according to some embodiments. The joint 123 is formed by a male end 200 of a first segment and a female end 300 of a second segment. In the rigidized state, the pin extension 215 is pushed towards the proximal end of the pin slot 315 and the first protrusion 210 is nested within the first recess 310. In some embodiments, the first protrusion 210 and first recess 310 have similar dimensions such that the relative movement of the segments are limited in 1, 2, or 3 axes by the contacting walls/sides of the first protrusion 210 and first recess 310 in the rigidized states. In some embodiments, when the first protrusion 210 and the first recess 310 are engaged, linear movement, pitch, yaw, and/or roll of the first segment relative to the second segment are limited by contacting walls of the first protrusion 210 and the first recess 310. In some embodiments, the second protrusion 220A is further nested in the second recess 320A and the 220B is nested within the third recess 320B. The relative movements of the two segments connected via the joint 123 are further limited by the contacting walls/sides of the second protrusion 220A and second recess 320A, and the contacting walls/ sides of the third protrusion 220B and third recess 320B.

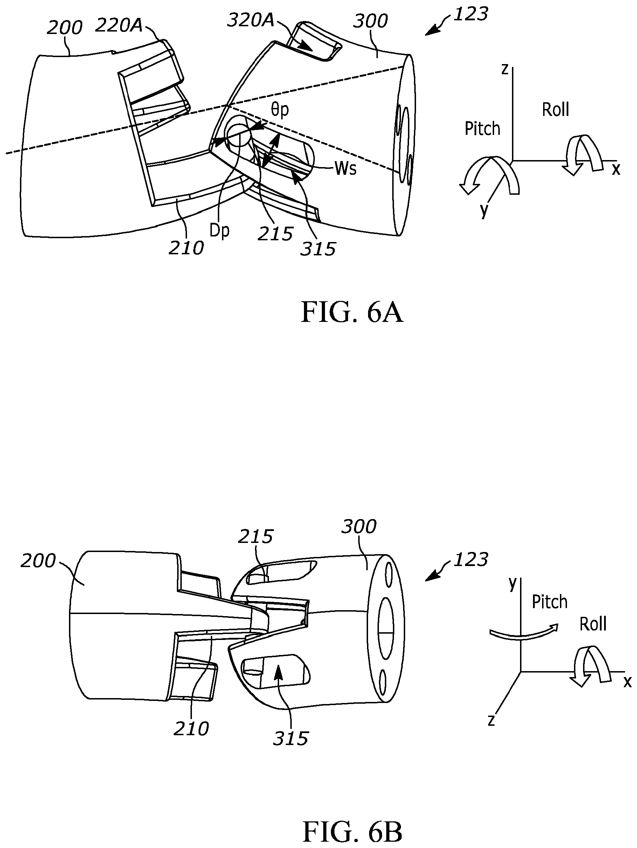

FIGS. 6A and 6B illustrate a side view and a bottom view, respectively, of the joint 123 of a tool 100 as shown in FIGS. 5A and 5B in a non-rigidized state according to some embodiments. As used herein, the x-axis is in the general direction of the length of the segments and the y-axis is in the general direction of the width of the pin extension 215. The z-axis is perpendicular to both x-axis and y-axis. In the non-rigidized state, the pin extension 215 can move between the distal and proximal ends of the pin slot 315 as shown in FIG. 4A, allowing the segments to move closer and further on the x-axis (i.e., linear movement). Further, the two segments may pivot about the y-axis, in a x-z plane (i.e., pitch) and pivot about the z-axis, in a x-y plane (i.e., yaw). In some embodiments, the segments may further be configured to rotate/twist about the x axis (i.e., roll) relative to each other. In some embodiments, a joint 123 as described herein may provide 6 degrees of freedom (forward-backward, pitch, yaw, and roll between the segments, and up-down, left-right movement of the segments) in the non-rigidized state.

When the segments are pitched relative to each other, the center lines of the two segments may pivot on the x-z plane, changing the angle θp between the center lines of the two segments. In some embodiments, one segment is configured to pitch relative to another segment with an angular displacement of up to 45 degrees, 90 degrees, or 150 degrees. In some embodiments, when the segments are pitched, the second protrusion 220A and second recess 320A may become completely disengaged and the third protrusion 220B and the third recess 320A may become completely disengaged, such that the relative movements of the segments are not constrained by the crenelation protrusions and recesses.

In some embodiments, in the non-rigidized state, the pin extension 215 is configured to rotate around an axis along a length Lp1 of the first protrusion 210 (FIG. 4B) within the pin slot 315, such that one segment is configured to roll about the axis relative to another segment. In some embodiments, at least 70% of the width Ws of the pin slot 315 is at least 0.3mm, 0.5mm, or 1mm greater than the effective diameter Dpin of the pin extension 215. In some embodiments, the segments are configured to roll relative to each other with an angular displacement of up to 10 degrees, up to 15 degrees, up to 25 degrees, or up to 30 degrees.

In some embodiments, in the non-rigid state, the pin extension 215 is configured to pivot relative to a length Ls of the pin slot 315 (FIG. 4B), such that one segment is configured to yaw relative to another segment with the pin extension 215 inside the pin slot 315. In some embodiments, one segment is configured to yaw relative to the other segment with an angular displacement of up to 20 degrees, up to 45 degrees, up to 70 degrees.

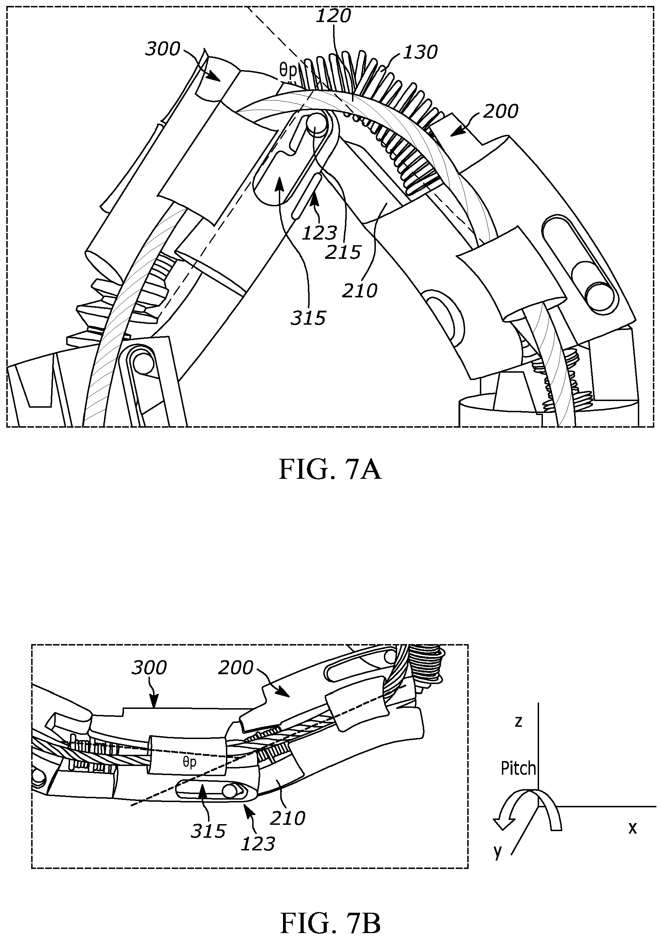

FIGS. 7A and 7B illustrate side views of another embodiment of a joint 123 according to some embodiments. In FIG. 7A, the segments are pitched in a first direction with the center lines of the two segments, as shown by the dashed lines, forming an angle θp in the x-y plane. In FIG. 7A, segments are pitched such that the crenelation protrusions and recesses are disengaged. In FIG. 7B, the segments are pitched in a second direction with the center lines of the two segments angled at θp. In FIG. 7B, segments are pitched such that the crenelation protrusions and recesses are partially engaged. However, with the tapering of the crenelation protrusions and recesses, the segments can still roll and yaw as positioned in FIG. 7B.

Also shown in FIGS. 7A and 7B are a line assembly 120 and a spring 130 acting as a counterforce element. When the line assembly 120 is not tensioned, the segments may be pushed apart by the spring 130 such that the pin extension 215 is moved towards the distal end of the pin slot 315 as shown in FIGS. 7A and 7B.

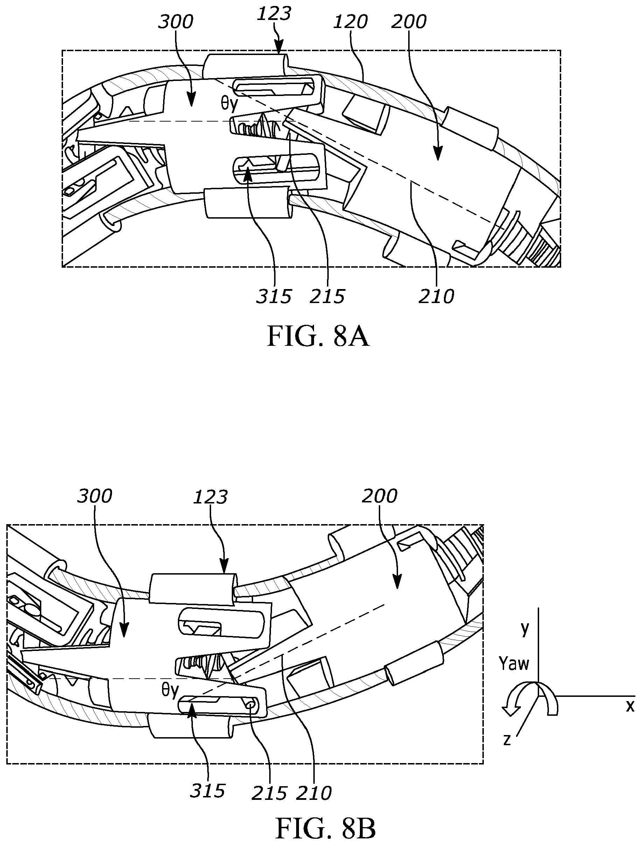

FIGS. 8A and 8B illustrate bottom views of another embodiment of a joint 123 according to some embodiments. In FIG. 8B, the segments are yawed in the first direction with the center lines of the two segments, as shown by the dashed lines, forming an angle θy in the x-y plane. As shown in FIG. 8A, the pin extension 215 may pivot within the pin slot 315 such that the top ends of the pin extension 215 are at different distances from the distal ends of the two openings of the pin slot 315. The tapered shape of the first protrusion 210 allows for greater amount of yaw when the pin extension 215 is near the distal end of the pin slot 315. FIG. 8B shows the segments yawed in the opposite direction in the x-y plane.

In some embodiments, a joint 123 as described herein may provide six degrees of freedom (forward-backward, pitch, roll, and yaw between segments and up-down, left-right movement of the segments) between connected segments via the pin extension 215 and pin slot 315 when the segments are non-rigidized. In some embodiments, the amount of possible pitch, roll, and yaw may vary depending on the relative forward-backward positioning of the two segments. When a force is applied to push the segments together, protrusions and recesses on the segment engages to limit the relative pitch, roll, and yaw between the segments.

In one or more embodiments, the protrusions and recesses are integrally formed with the body 114 of the segment 102. In some embodiments, the segments 102, including a male end 200 and/or a female end 300, can be formed using an additive manufacturing process, such as for example, three-dimensional printing, resulting in a stratum including a plurality of layers. In some embodiments, the segments 102 may be formed in the assembled state such that the pin extension 215 is formed together and within the pin slot 315 during an additive manufacturing process. For example, the bottom side of the pin slot 315 may be formed prior to the pin extension 215 and a top side of the pin slot 315 may be formed after the pin extension 215 to enclose the pin extension 215. In some embodiments, a computer model arranges the first segment and the second segment with a gap between the pin extension and the distal end, and between the pin extension and the proximal end of the pin slot. The gaps may serve as powder gaps in powder-based additive manufacturing.

In some embodiments, the body 114 of at least one of the segments 102 can be formed through an additive manufacturing process, such as by way of non-limiting example, three-dimensional printing. Bodies 114 in accordance with some embodiments described herein can thus include indicia of the three-dimensional printing manufacturing process such as stratum, e.g., layers, formed in the body 114 corresponding with individually stepped printing layers. In certain embodiments described herein, all segments 102 of the tool 100 can be formed using additive manufacturing processes, e.g., three-dimensional printing techniques. In a particular embodiment, the segments 102 can be additively manufactured simultaneously while already in the connected configuration.

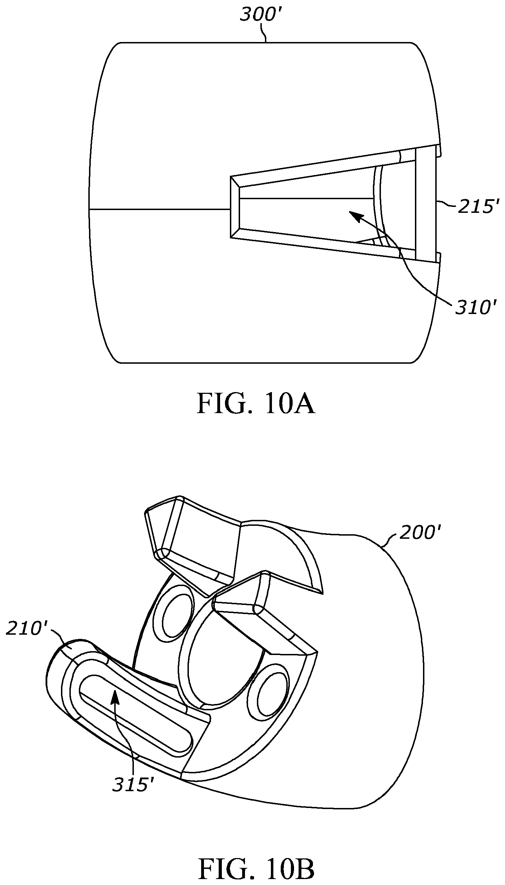

While the pin extension 215 is generally described to be part of the male end 200 and the pin slot 315 is described as part of the female end 300 herein, in some embodiment, the placement of the pin extension 215 and the pin slot 315 may be reversed. For example, FIG. 10A shows an alternative embodiment where the pin extension 215' is formed within a recess 310' of a female end 300'. The pin extension 215' extends across and bridges the opening of the recess 310'. FIG. 10B shows a corresponding male end 200' that includes a pin slot 315' on a protrusion 210'. Similar to other embodiments described herein, the pin extension 215' may be formed within the pin slot 315' to connect the segment having the female end 300' and the segment having the male end 200'. The joint formed by the pin extension 215' and the pin slot 315' may operate similarly to the embodiments described with reference to FIGS. 3A-6B. For example, the pin extension 215' can move between distal and proximal ends of the pin slot 315' and allows the segments to have linear movement, pitch, roll, and/or yaw relative to each other. When force is applied to push the segments together, the protrusion 210' and the recess 310' are configured to engage and limit the relative movements of the segments. Additional crenelation protrusions and recesses may also be present in such embodiments.

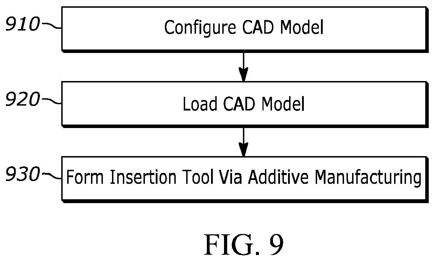

FIG. 9 illustrates a method 900 for forming a tool 100 described herein. In step 910, a Computer-Aided Designed ("CAD") model is configured. In some embodiments, the CAD model may define the shapes of one or more segments 102 of the tool 100 and their relative placement and orientation during the additive manufacturing process. In some embodiments, the pin extension 215 and pin slot 315 of the segments are coupled in the CAD model. In some embodiments, the CAD model includes a powder gap between the pin extension 215 and pin slot 315. In some embodiments, the powder gap may be 0.3mm or greater. In some embodiments, the CAD model may be configured via a user device comprising a processor and a memory. The user device may include user input/out devices such as a display screen, a keyboard, a touchscreen, a motion tracker, etc. In some embodiments, the CAD model is stored and retrieved from a computer readable memory.

In step 920, the CAD model is loaded onto an additive manufacturing device such as a 3D printer. In some embodiments, the 3D printer may be a powder bed fusion printer, a laser sintering printer, a stereolithography printer, a fused deposition modeling printer, etc., In some embodiments, the printing material may be any suitable metal, metal alloy, plastic, or composite material such as titanium, stainless steel, copper, nickel alloy, cobalt-chrome, aluminum alloy, refractory metals, resin, thermoplastic, acrylonitrile butadiene styrene, polylactic acid, polyethylene terephthalate glycol, carbon fiber, Kevlar, fiberglass, etc. In step 930, at least a portion of the tool 100 is formed by the additive manufacturing device executing an additive manufacturing task based on the CAD model.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

This written description uses examples to disclose the present disclosure, including the best mode, and also to enable any person skilled in the art to practice the disclosure, including making and using any devices or systems and performing any incorporated methods. The patentable scope of the disclosure is defined by the claims.

## Claims

1. A rigidizable insertion tool (100) comprising:
a first segment (102) having a pin extension (215); and
a second segment (102) having a pin slot (315) that is elongated along a length of the second segment;
wherein the first segment (102) and the second segment (102) are connected via a joint (123) comprising the pin extension (215) and the pin slot (315), the pin extension (215) being movable between a proximal end (315A-1) and a distal end (315A-2) of the pin slot (315) with movements of the first segment (102) relative to the second segment (102);
wherein when a force is applied to push the first segment (102) and the second segment (102) together, the pin extension (215) is moved toward the proximal end (315A-1) of the pin slot (315), and features (210, 310) of the first segment (102) and the second segment (102) are engaged to limit relative movement between the first segment (102) and the second segment (102);
**characterized in that** in a non-rigidized state of the joint (123), the first segment (102) is configured to pitch relative to the second segment (102) via a rotation of the pin extension (215) within the pin slot (315).

2. The tool (100) of claim 1, wherein the pin extension (215) is attached to a first protrusion (210) of the first segment (102) and the pin slot (315) is formed within a first recess (310) of the second segment (102).

3. The tool (100) of claim 2, wherein the pin extension (215) has two ends and the pin slot (315) comprises a first opening (315A) on a first wall of the first recess (315) and a second opening (315B) on a second wall of the first recess (315) for receiving the two ends of the pin extension (215); and
wherein a width (Wpin) of the pin extension from end to end is greater than a distance between the distal end of the first opening (315A) and the proximal end of the second opening (315B).

4. The tool (100) of any preceding claim, wherein the pin extension (215') is formed within a recess (310') of the first segment(102) and the pin slot (315') is formed on a protrusion (210') of the second segment(102).

5. The tool (100) of any preceding claim, wherein the features comprise a first protrusion (210) and a first recess (310) that are configured to engage when the force is applied to push the first segment (102) and the second segment (102) together, and
wherein when the first protrusion (210) and the first recess (310) are engaged, linear movement, pitch, yaw, and/or roll of the first segment (102) relative to the second segment (102) are limited by contacting walls of the first protrusion (210) and the first recess (310).

6. The tool (100) of claim 5, wherein the first segment (102) and the second segment (102) further comprise a second protrusion (220A) and a second recess (320A) configured to engage the second protrusion (220A) when the force is applied.

7. The tool (100) of claim 6, wherein the second protrusion (220A) is tapered at a distal end and the second recess (320A) is tapered toward a proximal end such that the first segment (102) is configured to yaw relative to the second segment (102) with at least a portion of the second protrusion (220A) inside the second recess (320A).

8. The tool (100) of any preceding claim, wherein the first segment (102) is configured to pitch relative to the second segment (102) with an angular displacement of up to 150 degrees.

9. The tool (100) of any preceding claim, wherein a distance (Ls) between the proximal end (315A-1) and the distal end (315A-2) of the pin slot (315) is at least five times greater than an effective diameter (Dpin) of the pin extension (215).

10. The tool (100) of any preceding claim, wherein, in the non-rigidized state, the pin extension (215) is configured to pivot relative to a length (Ls) of the pin slot within the pin slot (315), such that the first segment (102) is configured to yaw relative to the second segment (102).

11. The tool of any preceding claim, wherein at least 70% of a width (Ws) of the pin slot (315) is at least .3mm greater than an effective diameter (Dpin) of the pin extension (215).

12. The tool of any preceding claim, wherein, in the non-rigidize state, the pin extension (215) is configured to rotate around an axis (107) perpendicular to a width (Wpin) of the pin extension (215) within the pin slot (315), such that the first segment (102) is configured to roll about the axis relative to the second segment (102).

13. The tool of any preceding claim, wherein the first segment (102) is configured to roll relative to the second segment (102) with an angular displacement of up to 15 degrees.

14. The tool of claim 1, wherein the pin slot (315) is tapered toward the distal end (315A-2) and limits a rotation of the pin extension (215) when the pin extension (215) is at the distal end (315A-2) of the pin slot (315).

15. A method (900) of forming the rigidizable insertion tool (100) of claim 1, comprising:
forming the first segment(102) and the second segment(102) with additive manufacturing according to a computer model that arranges the first segment (102) and the second segment (102) with a gap between the pin extension (215) and the distal end (315A-2), and between the pin extension (215) and the proximal end (315A-1) of the pin slot (315),
wherein the pin extension (215) is formed within the pin slot (315) during the additive manufacturing.

## Patentansprüche

1. Versteifbares Einsetzwerkzeug (100), umfassend:
ein erstes Segment (102), das einen Stiftfortsatz (215) aufweist; und
ein zweites Segment (102), das einen Stiftschlitz (315) aufweist, der sich über die Länge des zweiten Segments erstreckt;
wobei das erste Segment (102) und das zweite Segment (102) über ein Gelenk (123) verbunden sind, das den Stiftfortsatz (215) und den Stiftschlitz (315) umfasst, wobei der Stiftfortsatz (215) bei Bewegungen des ersten Segments (102) relativ zum zweiten Segment (102) zwischen einem proximalen Ende (315A-1) und einem distalen Ende (315A-2) des Stiftschlitzes (315) bewegbar ist;
wobei, wenn eine Kraft aufgebracht wird, um das erste Segment (102) und das zweite Segment (102) zusammenzuschieben, der Stiftfortsatz (215) in Richtung des proximalen Endes (315A-1) des Stiftschlitzes (315) bewegt wird und Merkmale (210, 310) des ersten Segments (102) und des zweiten Segments (102) in Eingriff gebracht werden, um die Relativbewegung zwischen dem ersten Segment (102) und dem zweiten Segment (102) zu begrenzen,
**dadurch gekennzeichnet, dass** in einem nicht versteiften Zustand des Gelenks (123) das erste Segment (102) dazu konfiguriert ist, sich relativ zum zweiten Segment (102) durch eine Drehung der Stiftverlängerung (215) innerhalb des Stiftschlitzes (315) zu nicken.

2. Werkzeug (100) nach Anspruch 1, wobei der Stiftfortsatz (215) an einem ersten Vorsprung (210) des ersten Segments (102) befestigt ist und der Stiftschlitz (315) in einer ersten Ausnehmung (310) des zweiten Segments (102) ausgebildet ist.

3. Werkzeug (100) nach Anspruch 2, wobei der Stiftfortsatz (215) zwei Enden aufweist und der Stiftschlitz (315) eine erste Öffnung (315A) an einer ersten Wand der ersten Ausnehmung (315) und eine zweite Öffnung (315B) an einer zweiten Wand der ersten Ausnehmung (315) zum Aufnehmen der beiden Enden des Stiftfortsatzes (215) umfasst; und
wobei eine Breite (Wpin) des Stiftfortsatzes von Ende zu Ende größer ist als ein Abstand zwischen dem distalen Ende der ersten Öffnung (315A) und dem proximalen Ende der zweiten Öffnung (315B).

4. Werkzeug (100) nach einem der vorhergehenden Ansprüche, wobei der Stiftfortsatz (215') in einer Ausnehmung (310') des ersten Segments (102) ausgebildet ist und der Stiftschlitz (315') an einem Vorsprung (210') des zweiten Segments (102) ausgebildet ist.

5. Werkzeug (100) nach einem der vorhergehenden Ansprüche, wobei die Merkmale einen ersten Vorsprung (210) und eine erste Ausnehmung (310) umfassen, die dazu konfiguriert sind, ineinander einzugreifen, wenn die Kraft aufgebracht wird, um das erste Segment (102) und das zweite Segment (102) zusammenzuschieben, und
wobei, wenn der erste Vorsprung (210) und die erste Aussparung (310) in Eingriff sind, die lineare Bewegung, das Nicken, Gieren und/oder Rollen des ersten Segments (102) relativ zum zweiten Segment (102) durch sich berührende Wände des ersten Vorsprungs (210) und der ersten Aussparung (310) begrenzt werden.

6. Werkzeug (100) nach Anspruch 5, wobei das erste Segment (102) und das zweite Segment (102) ferner einen zweiten Vorsprung (220A) und eine zweite Aussparung (320A) umfassen, die dazu konfiguriert sind, mit dem zweiten Vorsprung (220A) in Eingriff zu kommen, wenn die Kraft aufgebracht wird.

7. Werkzeug (100) nach Anspruch 6, wobei der zweite Vorsprung (220A) an einem distalen Ende verjüngt ist und die zweite Aussparung (320A) in Richtung eines proximalen Endes hin so verjüngt ist, dass das erste Segment (102) dazu konfiguriert ist, relativ zum zweiten Segment (102) zu gieren, wobei mindestens ein Abschnitt des zweiten Vorsprungs (220A) innerhalb der zweiten Aussparung (320A) liegt.

8. Werkzeug (100) nach einem der vorhergehenden Ansprüche, wobei das erste Segment (102) dazu konfiguriert ist, relativ zu dem zweiten Segment (102) mit einer Winkelverschiebung von bis zu 150 Grad zu nicken.

9. Werkzeug (100) nach einem der vorhergehenden Ansprüche, wobei ein Abstand (Ls) zwischen dem proximalen Ende (315A-1) und dem distalen Ende (315A-2) des Stiftschlitzes (315) mindestens fünfmal größer ist als ein effektiver Durchmesser (Dpin) des Stiftfortsatzes (215).

10. Werkzeug (100) nach einem der vorhergehenden Ansprüche, wobei der Stiftfortsatz (215) in dem nicht versteiften Zustand dazu konfiguriert ist, relativ zu einer Länge (Ls) des Stiftschlitzes innerhalb des Stiftschlitzes (315) so zu schwenken, dass das erste Segment (102) dazu konfiguriert ist, relativ zu dem zweiten Segment (102) zu gieren.

11. Werkzeug nach einem der vorhergehenden Ansprüche, wobei mindestens 70% einer Breite (Ws) des Stiftschlitzes (315) mindestens 0,3 mm größer ist als ein effektiver Durchmesser (Dpin) des Stiftfortsatzes (215).

12. Werkzeug nach einem der vorhergehenden Ansprüche, wobei der Stiftfortsatz (215) in dem nicht versteiften Zustand dazu konfiguriert ist, sich um eine Achse (107) senkrecht zu einer Breite (Wpin) des Stiftfortsatzes (215) innerhalb des Stiftschlitzes (315) so zu drehen, dass das erste Segment (102) dazu konfiguriert ist, um die Achse relativ zu dem zweiten Segment (102) zu rollen.

13. Werkzeug nach einem der vorhergehenden Ansprüche, wobei das erste Segment (102) dazu konfiguriert ist, relativ zu dem zweiten Segment (102) mit einer Winkelverschiebung von bis zu 15 Grad zu rollen.

14. Werkzeug nach Anspruch 1, wobei der Stiftschlitz (315) sich in Richtung zu dem distalen Ende (315A-2) hin verjüngt und eine Drehung des Stiftfortsatzes (215) begrenzt, wenn sich der Stiftfortsatz (215) am distalen Ende (315A-2) des Stiftschlitzes (315) befindet.

15. Verfahren (900) zum Ausbilden des versteifbaren Einsetzwerkzeugs (100) nach Anspruch 1, umfassend:
Ausbilden des ersten Segments (102) und des zweiten Segments (102) mit additiver Fertigung gemäß einem Computermodell, das das erste Segment (102) und das zweite Segment (102) mit einem Spalt zwischen dem Stiftfortsatz (215) und dem distalen Ende (315A-2) und zwischen dem Stiftfortsatz (215) und dem proximalen Ende (315A-1) des Stiftschlitzes (315) anordnet,
wobei der Stiftfortsatz (215) während der additiven Fertigung innerhalb des Stiftschlitzes (315) ausgebildet wird.

## Revendications

1. Outil (100) d'insertion rigidifiable comprenant :
un premier segment (102) présentant un prolongement de broche (215) ; et
un second segment (102) présentant une fente de broche (315) qui est allongée sur toute la longueur du second segment ;
dans lequel le premier segment (102) et le second segment (102) sont reliés par l'intermédiaire d'une articulation (123) comprenant le prolongement de broche (215) et la fente de broche (315), le prolongement de broche (215) étant mobile entre une extrémité proximale (315A-1) et une extrémité distale (315A-2) de la fente de broche (315) avec les mouvements du premier segment (102) par rapport au second segment (102) ;
dans lequel, lorsqu'une force est appliquée pour rapprocher le premier segment (102) et le second segment (102), le prolongement de broche (215) est déplacé vers l'extrémité proximale (315A-1) de la fente de broche (315), et des caractéristiques (210, 310) du premier segment (102) et du second segment (102) se mettent en prise pour limiter le mouvement relatif entre le premier segment (102) et le second segment (102),
**caractérisé en ce que**, dans un état non rigidifié de l'articulation (123), le premier segment (102) est configuré pour s'incliner par rapport au second segment (102) via une rotation du prolongement de broche (215) au sein de la fente de broche (315).

2. Outil (100) selon la revendication 1, dans lequel le prolongement de broche (215) est fixé à une première saillie (210) du premier segment (102) et la fente de broche (315) est formée au sein d'un premier évidement (310) du second segment (102).

3. Outil (100) selon la revendication 2, dans lequel le prolongement de broche (215) présente deux extrémités et la fente de broche (315) présente une première ouverture (315A) sur une première paroi du premier évidement (315) et une seconde ouverture (315B) sur une seconde paroi du premier évidement (315) pour recevoir les deux extrémités du prolongement de broche (215) ; et
dans lequel une largeur (Wpin) du prolongement de broche d'une extrémité à l'autre est supérieure à une distance entre l'extrémité distale de la première ouverture (315A) et l'extrémité proximale de la seconde ouverture (315B).

4. Outil (100) selon une quelconque revendication précédente, dans lequel le prolongement de broche (215') est formé au sein d'un évidement (310') du premier segment (102) et la fente de broche (315') est formée sur une saillie (210') du second segment (102).

5. Outil (100) selon une quelconque revendication précédente, dans lequel les caractéristiques comprennent une première saillie (210) et un premier évidement (310) qui sont configurés pour se mettre en prise lorsque la force est appliquée pour rapprocher le premier segment (102) et le second segment (102), et
dans lequel, lorsque la première saillie (210) et le premier évidement (310) sont en prise, le mouvement linéaire, le pas, le lacet et/ou le roulis du premier segment (102) par rapport au second segment (102) sont limités par le contact entre les parois de la première saillie (210) et du premier évidement (310).

6. Outil (100) selon la revendication 5, dans lequel le premier segment (102) et le second segment (102) comprennent en outre une seconde saillie (220A) et un second évidement (320A) configuré pour mettre en prise la seconde saillie (220A) lorsqu'une force est appliquée.

7. Outil (100) selon la revendication 6, dans lequel la seconde saillie (220A) est effilée à une extrémité distale et le second évidement (320A) est effilé vers une extrémité proximale de sorte que le premier segment (102) est configuré pour osciller par rapport au second segment (102) avec au moins une partie de la second saillie (220A) à l'intérieur du second évidement (320A).

8. Outil (100) selon une quelconque revendication précédente, dans lequel le premier segment (102) est configuré pour s'incliner par rapport au second segment (102) avec un déplacement angulaire pouvant atteindre 150 degrés.

9. Outil (100) selon une quelconque revendication précédente, dans lequel une distance (Ls) entre l'extrémité proximale (315A-1) et l'extrémité distale (315A-2) de la fente de broche (315) est au moins cinq fois supérieure à un diamètre effectif (Dpin) du prolongement de broche (215).

10. Outil (100) selon une quelconque revendication précédente, dans lequel, à l'état non rigidifié, le prolongement de broche (215) est configuré pour pivoter par rapport à une longueur (Ls) de la fente de broche au sein de la fente de broche (315), de sorte que le premier segment (102) est configuré pour osciller par rapport au second segment (102).

11. Outil selon une quelconque revendication précédente, dans lequel au moins 70 % d'une largeur (Ws) de la fente de broche (315) est supérieure d'au moins 0,3 mm à un diamètre effectif (Dpin) du prolongement de broche (215).

12. Outil selon une quelconque revendication précédente, dans lequel, à l'état non rigidifié, le prolongement de broche (215) est configuré pour tourner autour d'un axe (107) perpendiculaire à une largeur (Wpin) du prolongement de broche (215) au sein de la fente de broche (315), de sorte que le premier segment (102) est configuré pour rouler autour de l'axe par rapport au second segment (102).

13. Outil selon une quelconque revendication précédente, dans lequel le premier segment (102) est configuré pour rouler par rapport au second segment (102) avec un déplacement angulaire pouvant atteindre 15 degrés.

14. Outil selon la revendication 1, dans lequel la fente de broche (315) est effilée vers l'extrémité distale (315A-2) et limite une rotation du prolongement de broche (215) lorsque le prolongement de broche (215) se trouve à l'extrémité distale (315A-2) de la fente de broche (315).

15. Procédé (900) de fabrication de l'outil (100) d'insertion rigidifiable selon la revendication 1, comprenant :
la formation du premier segment (102) et du second segment (102) par fabrication additive selon un modèle informatique qui agence le premier segment (102) et le second segment (102) avec un espace entre le prolongement de broche (215) et l'extrémité distale (315A-2), et entre le prolongement de broche (215) et l'extrémité proximale (315A-1) de la fente de broche (315),
dans lequel le prolongement de broche (215) est formé au sein de la fente de broche (315) pendant la fabrication additive.
